# FASCICULE DE BREVET EUROPEEN

(11) **EP 2 714 511 B1**
(45) Date de publication et mention de la délivrance du brevet: **19.08.2015**
(21) Numéro de dépôt: 12728968.4
(22) Date de dépôt: 29.05.2012
(51) Int. Cl.: B64C 1/14

(54) **DISPOSITIF D'OUVERTURE D'URGENCE D'UNE PORTE D'AERONEF**
NOTÖFFNUNGSVORRICHTUNG FÜR EINE FLUGZEUGTÜR
EMERGENCY OPENING DEVICE FOR AN AIRCRAFT DOOR

(30) Priorité: 31.05.2011 FR 1154740
(43) Date de publication de la demande: 09.04.2014
(73) Titulaire: Latecoere, 31500 Toulouse (FR)
(72) Inventeur: LAMAT, Patrick, F-31200 Toulouse (FR)
(74) Mandataire: Junca, Eric
(86) Numéro de dépôt international: PCT/EP2012/002261
(87) Numéro de publication internationale: WO 2012/163513

(56) Documents cités:
- EP-A1- 1 300 334
- US-A- 4 071 271
- US-A- 6 059 231
- US-A1- 2006 065 778

## Description

L'invention concerne un dispositif d'ouverture d'urgence d'une porte d'aéronef dotée d'un mécanisme d'ouverture.

Les portes d'aéronefs destinées à permettre une évacuation d'urgence des passagers comportent usuellement un dispositif d'ouverture d'urgence destiné à être activé lors d'une procédure d'évacuation d'urgence en vue d'engendrer une ouverture rapide des portes sans nécessiter d'intervention humaine.

De tels dispositifs d'ouverture comprennent classiquement des moyens d'actionnement du mécanisme d'ouverture de la porte, commutables entre un état passif et un état actif d'activation du dit mécanisme d'ouverture, et des moyens d'activation des moyens d'actionnement.

A l'heure actuelle, tel que notamment décrit dans les demandes de brevet EP 1 300 334 A1 et EP 0 71 073, les moyens d'actionnement consistent classiquement en un actionneur (ou élément moteur...) de type pneumatique alimenté au moyen d'une réserve annexe de fluide moteur.

De tels moyens d'actionnement présentent toutefois plusieurs inconvénients. En effet, et en premier lieu, ils s'avèrent d'un poids et d'un encombrement relativement importants, en raison notamment de la présence de la réserve annexe de fluide moteur. De plus, ils imposent d'effectuer un contrôle périodique de la pression du fluide moteur, et de remplacer périodiquement la réserve annexe même en l'absence d'utilisation de cette dernière. Enfin, après activation du dispositif d'ouverture d'urgence ces moyens d'actionnement imposent, en vue d'être à nouveau opérationnels, un remplacement de la réserve annexe de fluide moteur.

Une autre solution actuelle décrite notamment dans la demande de brevet FR 2 864 021 permet de diminuer l'encombrement et le poids des moyens d'actionnement. En effet, selon cette solution, les moyens d'actionnement consistent en un vérin pyrotechnique, c'est-à-dire un vérin autonome n'exigeant pas de source d'alimentation en fluide moteur. Par contre, de tels vérins pyrotechniques nécessitent d'être périodiquement inspectés et remplacés même en l'absence d'utilisation. Ces vérins pyrotechniques doivent, en outre, être également remplacés après activation du dispositif d'ouverture d'urgence.

La présente invention vise à pallier les inconvénients des dispositifs actuels d'ouverture d'urgence des portes d'aéronefs, et a pour premier objectif de fournir un dispositif d'ouverture d'urgence dont les moyens d'actionnement présentent un poids et un encombrement réduits, et consistent en des moyens d'actionnement de conception mécanique ne requérant ni maintenance en l'absence d'utilisation du dispositif d'ouverture, ni remplacement d'un quelconque organe suite à une activation du dit dispositif d'ouverture.

Un autre objectif de l'invention est de fournir un dispositif d'ouverture d'urgence conçu pour pouvoir être réarmé et immédiatement opérationnel après une activation du dit dispositif d'ouverture.

A cet effet, l'invention vise un dispositif d'ouverture d'urgence d'une porte d'aéronef dotée d'un mécanisme d'ouverture, comprenant des moyens d'actionnement du mécanisme d'ouverture commutables entre un état passif et un état actif d'activation du dit mécanisme d'ouverture, et des moyens d'activation des moyens d'actionnement, et, selon l'invention, ce dispositif d'ouverture d'urgence se caractérise en ce que :
- les moyens d'actionnement comprennent :
   ▪ un organe de manoeuvre mobile doté d'un embout de liaison avec le mécanisme d'ouverture de la porte, et d'un tronçon d'extrémité opposé tubulaire dit de réarmement,
   ▪ des moyens élastiques de compression disposés entre un élément de butée fixe et l'embout de liaison de l'organe de manoeuvre,
   ▪ un organe de retenue du tronçon de réarmement de l'organe de manoeuvre comportant au moins deux mâchoires mobiles entre une position fermée de verrouillage du tronçon de réarmement, dans une position de l'organe de manoeuvre correspondant à l'état passif des moyens d'actionnement dans laquelle les moyens élastiques sont maintenus comprimés, et une position ouverte de libération du dit tronçon de réarmement autorisant le déplacement de l'organe de manoeuvre vers une position correspondant à l'état actif des moyens d'actionnement, sous l'effet de l'effort résultant de la détente des moyens élastiques,
- les moyens d'activation sont adaptés pour entraîner l'ouverture des mâchoires de l'organe de retenue.

Selon l'invention, les moyens d'actionnement sont donc d'une conception totalement mécanique et ne nécessitent pas de fluide moteur en vue d'être activés. Du fait de cette conception et de ce mode de fonctionnement de tels moyens d'actionnement présentent donc un poids et un encombrement réduits par rapport aux moyens d'actionnement actuels de conception pneumatique.

De plus, de tels moyens d'actionnement ne comportent aucun élément ni substance tels que fluide moteur ou charge pyrotechnique, susceptibles de s'altérer dans le temps, et ils ne requièrent donc aucune maintenance.

Enfin, l'activation du dispositif d'ouverture n'entraîne aucune consommation d'une quelconque substance ni aucune altération d'un quelconque organe constitutif des moyens d'actionnement, de sorte que le dit dispositif d'ouverture peut être rapidement à nouveau opérationnel après activation.

Selon un mode de réalisation avantageux de l'invention, les mâchoires de l'organe de retenue sont maintenues dans leur position fermée, à l'encontre de l'effort exercé par des moyens élastiques, au moyen d'un lien ceinturant les dites mâchoires, et les moyens d'activation comprennent des moyens de maintien du lien dans sa position enroulée autour des mâchoires, aptes à engendrer sur commande la libération du dit lien.

De plus, les moyens de maintien du lien comprennent avantageusement un électro-aimant doté d'une gâchette agencée pour coopérer avec un élément d'accrochage formé au niveau d'une des extrémités libres du dit lien, et des moyens d'alimentation électrique adaptés, sur commande, pour exciter le dit électro-aimant de façon à libérer l'élément d'accrochage du lien.

Par ailleurs, le tronçon de réarmement de l'organe de manoeuvre comporte avantageusement un embout de manoeuvre apte à permettre de saisir le dit organe de manoeuvre au moyen d'un outil adapté pour coopérer avec le dit embout de manoeuvre, en vue du réarmement des moyens d'actionnement.

De plus, selon un mode de réalisation avantageux de l'invention :
- le tronçon de réarmement de l'organe de manoeuvre comporte une tige filetée montée rotative autour de son axe de révolution, dotée d'un embout de manoeuvre apte à permettre d'entraîner la rotation de la dite tige,
- les mâchoires de l'organe de retenue délimitent, dans leur position fermée, un alésage taraudé conjugué de la tige filetée du tronçon de réarmement de l'organe de manoeuvre,
- l'organe de retenue et l'organe de manoeuvre étant disposés et adaptés de façon qu'au moins un tronçon de la tige filetée s'étende dans l'emprise de l'alésage de l'organe de retenue pour chacune des positions de l'organe de manoeuvre.

De telles dispositions permettent de « réarmer » les moyens d'actionnement qui peuvent donc être immédiatement opérationnels après une activation du dit dispositif d'ouverture.

Il est à noter, en outre, que le filetage du tronçon de réarmement associé au taraudage de l'alésage des mâchoires conduit à obtenir un effort de retenue très important permettant d'utiliser des moyens élastiques présentant un tarage conséquent.

De façon avantageuse selon l'invention, l'embout de manoeuvre du tronçon de réarmement de l'organe de manoeuvre consiste en un alésage borgne formant une empreinte prédéterminée.

Selon un autre mode de réalisation avantageux de l'invention, l'organe de retenue présente des mâchoires adaptées pour conférer au dit organe de retenue la forme générale d'un écrou.

Par ailleurs, l'organe de manoeuvre consiste avantageusement, selon l'invention, en un piston autour duquel s'étendent les moyens élastiques, doté d'un embout de liaison de butée des dits moyens élastiques, et prolongé, à l'opposé du dit embout de liaison, par le tronçon de réarmement.

L'élément fixe de butée des moyens élastiques consiste, quant à lui, avantageusement selon l'invention, en une entretoise tubulaire dans le prolongement de laquelle est fixé l'organe de retenue.

De telles dispositions permettent notamment de réaliser avantageusement un dispositif d'ouverture d'urgence adapté pour être intégré dans un bras d'une porte d'aéronef articulé autour de deux arbres respectivement montés sur le dit aéronef et la dite porte, en vue de l'actionnement d'un mécanisme d'ouverture adapté pour entrainer le pivotement du dit bras.

De plus, un tel dispositif d'ouverture peut avantageusement être conçu pour consister en un produit fini formant un « vérin mécanique » directement opérationnel après connexion de l'électro-aimant à une source électrique.

D'autres caractéristiques buts et avantages de l'invention ressortiront de la description détaillée qui suit en référence aux dessins annexés qui en représentent à titre d'exemple non limitatif un mode de réalisation préférentiel. Sur ces dessins :

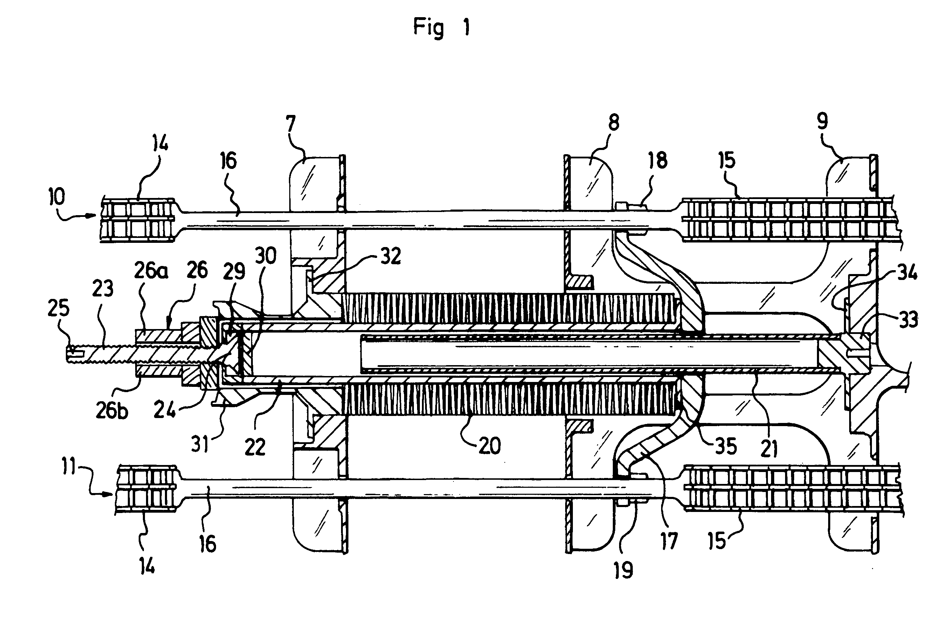

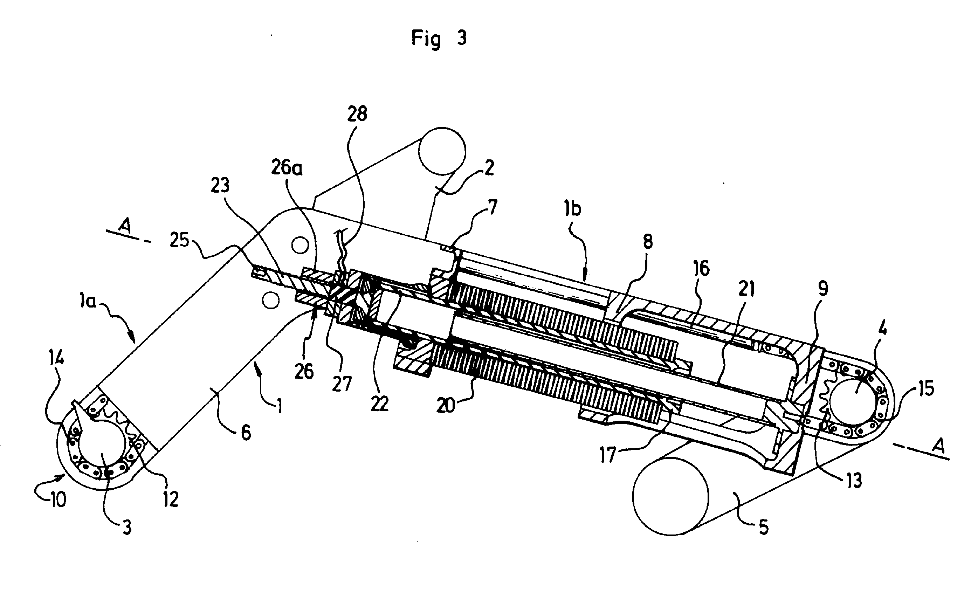

- la figure 1 est une vue partielle, par un plan A de la figure 3, d'un mécanisme d'ouverture d'une porte d'aéronef associé à un dispositif d'ouverture d'urgence selon l'invention, dans l'état passif de ce dernier,

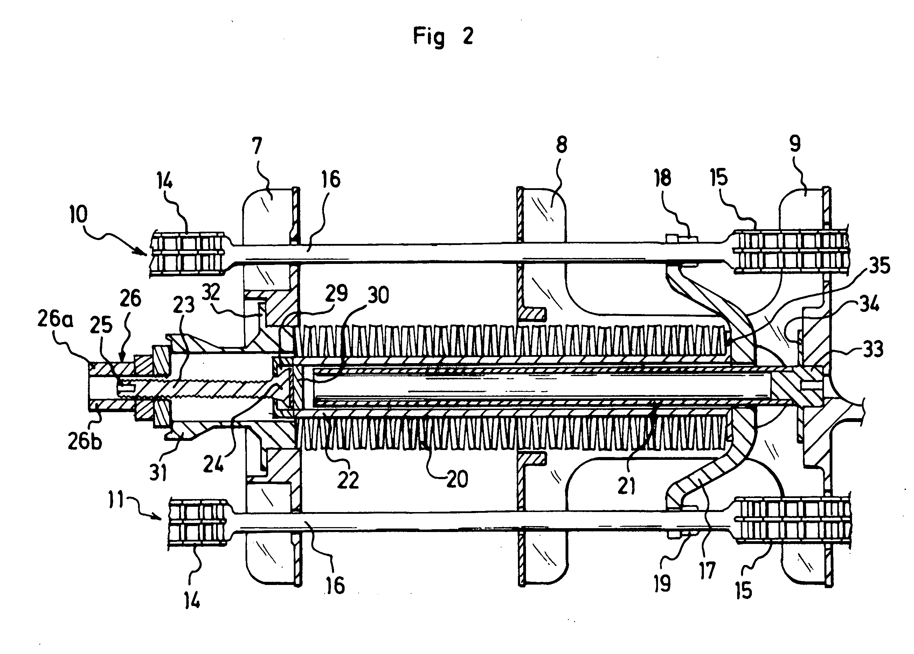

- la figure 2 est une vue partielle, par le plan A, de ce mécanisme d'ouverture associé à un dispositif d'ouverture d'urgence selon l'invention, dans l'état actif de ce dernier,
- et la figure 3 est une vue de dessus, avec des arrachés partiels, d'un bras articulé d'une porte d'aéronef équipé d'un dispositif d'ouverture d'urgence conforme à l'invention.

Le dispositif d'ouverture d'urgence selon l'invention est représenté, à titre d'exemple, intégré dans un bras coudé 1 en forme de V comportant :
- une branche rectiligne 1 a de plus faible longueur dont l'extrémité libre est montée rotative autour d'un arbre 3 solidaire du fuselage de l'aéronef (non représenté),
- une branche rectiligne 1 b de plus grande longueur intégrant le dispositif d'ouverture d'urgence, dont l'extrémité libre est montée rotative autour d'un arbre 4 solidarisé, par exemple par un jeu de biellettes 5, à la porte de l'aéronef (non représentée).

Ce bras 1 est, en outre, de type mécano-soudé, et comporte principalement deux longerons parallèles tels que 6 reliés par des entretoises telles que 7, 8, 9 réparties le long de chacune des branches 1a, 1b du dit bras.

De plus, une poignée 2 d'actionnement manuel du bras 1 est solidarisée à la branche 1 a du dit bras.

Ce bras 1 intègre également un mécanisme de liaison en rotation des deux arbres 3 et 4, comportant deux jeux de chaînes 10, 11 superposées engrenant chacune autour de pignons 12, 13 respectivement solidaires des arbres 3 et 4, et de pignons de renvoi (non représentés) disposés au niveau du sommet du bras coudé 1.

Chacun de ces jeux de chaîne 10, 11 se compose, en outre, de deux brins de chaîne 14, 15 reliés entre eux au moyen de deux tirants tels que 16 de longueur réglable, en vue du réglage de la tension des dites chaînes.

De façon connue en soi, le pivotement du bras 1 actionné manuellement au moyen de la poignée 2 entraîne une translation des deux jeux de chaîne 10, 11 et un pivotement de la porte au cours duquel cette dernière reste parallèle à sa position initiale de fermeture.

Le bras 1 intègre, en outre, un organe poussoir 17 en forme d'arbalète dont les extrémités sont montées coulissantes le long de deux tirants superposés 16 appartenant chacun à un jeu de chaîne 10, 11.

De plus, cet organe poussoir 17 est disposé de façon à venir en butée contre deux butées, respectivement 18, 19, solidaires chacune d'un des deux tirants précités 16.

Le dispositif d'ouverture d'urgence selon l'invention est adaptés pour actionner le mécanisme d'ouverture décrit ci-dessus, comportant le bras 1, les deux jeux de chaîne 10, 11 et l'organe poussoir 17, cet actionnement consistant à déplacer l'organe poussoir 17 positionné en appui contre les butées 18, 19, de façon à entraîner une translation des deux jeux de chaîne 10, 1 et par conséquent le pivotement de la porte.

Ce dispositif d'ouverture d'urgence comporte, en premier lieu, des moyens d'actionnement constituant un «vérin mécanique».

Ces moyens d'actionnement comprennent, en premier lieu, une âme tubulaire télescopique constituée :
- d'un arbre tubulaire de guidage 21 adapté pour s'étendre au travers d'un orifice ménagé dans l'organe poussoir 17, et doté au niveau d'une de ses extrémités, d'un obturateur 33 sur le pourtour duquel s'étend une platine 34 de fixation du dit arbre de guidage sur l'entretoise 9 du bras 1 située en aval de l'organe poussoir 17,
- d'un arbre tubulaire extérieur 22 monté coulissant le long de l'arbre de guidage 21, doté d'une collerette externe 35 de butée contre l'organe poussoir 17 au niveau d'une de ses extrémités, et prolongé, au niveau de son extrémité opposée, par une tige filetée 23.

De plus, la tige filetée 23 comporte une tête hémisphérique 24 logée dans l'arbre coulissant 22 et bloquée en translation entre une rondelle 30 contre laquelle elle vient en appui avec interposition d'un Circlips ® (non représenté), et un siège 29 définissant une portée hémisphérique autorisant la rotation de la tige filetée 23 autour de son axe de révolution.

La tige filetée comporte également, à l'opposé de la tête 24 un embout de manoeuvre 25 consistant en un alésage borgne formant une empreinte prédéterminée.

Les moyens d'actionnement comprennent également des moyens élastiques de compression 20 disposés autour de l'arbre coulissant 22, composés en l'exemple d'un empilement de rondelles Belleville.

Ces moyens d'actionnement comprennent, en outre, une entretoise tubulaire 31 à l'intérieur de laquelle s'étend la tige filetée 23, la dite entretoise tubulaire étant dotée d'un tronçon d'extrémité adapté pour se loger dans un orifice ménagé dans une entretoise 7 du bras 1 située en amont de l'organe poussoir 17, et pour former une butée annulaire pour les moyens élastiques.

Cette entretoise tubulaire 31 comporte, en outre, une collerette externe 32 formant une platine de fixation contre l'entretoise 7 précitée du bras 1.

Les moyens d'actionnement comportent, enfin, un organe de retenue 26 de la tige filetée 23, solidarisé sur l'entretoise tubulaire 31 de façon à s'étendre dans le prolongement amont de cette dernière.

Cet organe de retenue 26 comporte des mâchoires 26a mobiles entre une position fermée de verrouillage de la tige filetée 23, dans une position de l'arbre coulissant 22 correspondant à l'état passif des moyens d'actionnement, dans laquelle les moyens élastiques 20 sont maintenus comprimés entre l'entretoise tubulaire 31 et la collerette 35, et une position ouverte de libération de la dite tige filetée autorisant la détente des moyens élastiques 20, et entraînent le déplacement de l'organe poussoir 17, la translation subséquente des deux jeux de chaîne 10, 1, et le pivotement de la porte.

A titre d'exemple de réalisation avantageux cet organe de retenue 26 est du type décrit dans la demande de brevet EP 2 279 120 considérée comme faisant partie intégrante de la présente description, et correspond préférentiellement au mode réalisation décrit dans cette demande de brevet en référence à la figure 12 et comportant notamment :
- trois mâchoires 26a, 26b délimitant un alésage taraudé conjugué du filetage de la tige filetée 23, maintenues dans leur position fermée, à l'encontre de l'effort exercé par des moyens élastiques, au moyen d'un lien ceinturant les dites mâchoires,
- des moyens de maintien du lien dans sa position enroulée autour des mâchoires 26a, 26b, comprenant un électro-aimant 27 doté d'une gâchette agencée pour coopérer avec un élément d'accrochage formé au niveau d'une des extrémités libres du dit lien, le dit électro-aimant étant connecté par des câbles d'alimentation 28 à une source électrique adaptée, sur commande, pour exciter cet électro-aimant 27 de façon à libérer l'élément d'accrochage du lien.

Un tel organe de retenue 26 permet, en premier lieu, notamment grâce à l'association tige filetée / alésage taraudé, d'utiliser des moyens élastiques 20 présentant un tarage conséquent susceptible d'entrainer une ouverture rapide de la porte.

De plus, cet organe de retenue permet de réarmer les moyens d'actionnement, après utilisation de ces derniers, au moyen d'un outil adapté pour coopérer avec l'embout de manoeuvre 25 de la tige filetée 23, en vue de permettre de visser cette dernière à l'intérieur de l'organe de retenue 26.

Le dispositif d'ouverture d'urgence ci-dessus décrit comporte donc des moyens d'actionnement consistant en un « vérin mécanique » réarmable à déclenchement électrique, d'une part, d'un faible poids et d'encombrement réduit, et d'autre part, ne requérant aucune opération de surveillance et de maintenance.

De plus, la conception de ces moyens d'actionnement conduit à l'obtention d'une force d'ouverture importante susceptible notamment d'engendrer une ouverture très rapide

## Revendications

1. Dispositif d'ouverture d'urgence d'une porte d'aéronef dotée d'un mécanisme d'ouverture (10-19), comprenant des moyens d'actionnement (20-26) du mécanisme d'ouverture commutables entre un état passif et un état actif d'activation du dit mécanisme d'ouverture, et des moyens d'activation (27, 28) des moyens d'actionnement, le dit dispositif d'ouverture d'urgence étant **caractérisé en ce que** :
- les moyens d'actionnement comprennent :
▪ un organe de manoeuvre mobile (21-23, 35) doté d'un embout (35), de liaison avec le mécanisme d'ouverture (10-19) de la porte, et d'un tronçon d'extrémité opposé tubulaire (23), dit de réarmement,
▪ des moyens élastiques de compression (20) disposés entre un élément de butée fixe (31) et l'embout de liaison (35) de l'organe de manoeuvre (21-23, 35),
▪ un organe de retenue (26) du tronçon de réarmement (23) de l'organe de manoeuvre (21-23, 35) comportant au moins deux mâchoires (26a, 26b) mobiles entre une position fermée de verrouillage du tronçon de réarmement (23), dans une position de l'organe de manoeuvre (21-23, 35) correspondant à l'état passif des moyens d'actionnement dans laquelle les moyens élastiques (20) sont maintenus comprimés, et une position ouverte de libération du dit tronçon de réarmement autorisant le déplacement de l'organe de manoeuvre (21-23, 35) vers une position correspondant à l'état actif des moyens d'actionnement, sous l'effet de l'effort résultant de l'expansion des moyens élastiques (20),
- les moyens d'activation (27, 28) sont adaptés pour entraîner l'ouverture des mâchoires (26a, 26b) de l'organe de retenue (26).

2. Dispositif d'ouverture d'urgence selon la revendication 1 **caractérisé en ce que** :
- les mâchoires (26a, 26b) de l'organe de retenue (26) sont maintenues dans leur position fermée, à l'encontre de l'effort exercé par des moyens élastiques, au moyen d'un lien ceinturant les dites mâchoires,
- les moyens d'activation comprennent des moyens de maintien (27) du lien dans sa position enroulée autour des mâchoires (26a, 26b), aptes à engendrer sur commande la libération du dit lien.

3. Dispositif d'ouverture d'urgence selon la revendication 2 **caractérisé en ce que** les moyens de maintien du lien comprennent un électro-aimant (27) doté d'une gâchette agencée pour coopérer avec un élément d'accrochage formé au niveau d'une des extrémités libres du dit lien, et des moyens d'alimentation électrique (28) adaptés, sur commande, pour exciter le dit électro-aimant de façon à libérer l'élément d'accrochage du lien.

4. Dispositif d'ouverture d'urgence selon l'une des revendications précédentes **caractérisé en ce que** le tronçon de réarmement (23) de l'organe de manoeuvre (21-23, 35) comporte un embout de manoeuvre (25) apte à permettre de saisir le dit organe de manoeuvre au moyen d'un outil adapté pour coopérer avec le dit embout de manoeuvre, en vue du réarmement des moyens d'actionnement.

5. Dispositif d'ouverture d'urgence selon la revendication 4 **caractérisé en ce que** :
- le tronçon de réarmement de l'organe de manoeuvre (21-23, 35) comporte une tige filetée (23) montée rotative autour de son axe de révolution, dotée d'un embout de manoeuvre (25) apte à permettre d'entraîner la rotation de la dite tige,
- les mâchoires (26a, 26b) de l'organe de retenue (26) délimitent, dans leur position fermée, un alésage taraudé conjugué de la tige filetée (23) du tronçon de réarmement de l'organe de manoeuvre (21-23, 35),
- l'organe de retenue (26) et l'organe de manoeuvre (21-23, 35) étant disposés et adaptés de façon qu'au moins un tronçon de la tige filetée (23) s'étende dans l'emprise de l'alésage de l'organe de retenue (26) pour chacune des positions de l'organe de manoeuvre (21-23, 35).

6. Dispositif d'ouverture d'urgence selon la revendication 5 **caractérisé en ce que** l'embout de manoeuvre (25) du tronçon de réarmement (23) de l'organe de manoeuvre (21-23, 35) consiste en un alésage borgne formant une empreinte prédéterminée.

7. Dispositif d'ouverture d'urgence selon l'une des revendications 5 ou 6 **caractérisé en ce que** l'organe de retenue (26) présente des mâchoires (26a, 26b) adaptées pour conférer au dit organe de retenue la forme générale d'un écrou.

8. Dispositif d'ouverture d'urgence selon l'une des revendications précédentes **caractérisé en ce que** l'organe de manoeuvre (21-23, 35) consiste en un piston (22) autour duquel s'étendent les moyens élastiques (20), doté d'un embout de liaison (35) de butée des dits moyens élastiques, et prolongé, à l'opposé du dit embout de liaison, par le tronçon de réarmement (23).

9. Dispositif d'ouverture d'urgence selon l'une des revendications précédentes caractérisé en ce l'élément fixe de butée des moyens élastiques (20) consiste en une entretoise tubulaire (31) dans le prolongement de laquelle est fixé l'organe de retenue (26).

10. Dispositif d'ouverture d'urgence selon l'une des revendications précédentes **caractérisé en ce qu'**il est adapté pour être intégré dans un bras (1) d'une porte d'aéronef articulé autour de deux arbres (3, 4) respectivement montés sur le dit aéronef et la dite porte, en vue de l'actionnement d'un mécanisme d'ouverture adapté pour entrainer le pivotement du dit bras.

## Patentansprüche

1. Notöffnungsvorrichtung für eine Flugzeugtür, die mit einem Öffnungsmechanismus (10-19) versehen ist, umfassend Mittel (20-26) zur Betätigung des Öffnungsmechanismus, die zwischen einem passiven Zustand und einem aktiven Zustand der Betätigung des Öffnungsmechanismus schaltbar sind, und Mittel (27, 28) zur Aktivierung der Betätigungsmittel, wobei die Notöffnungsvorrichtung **dadurch gekennzeichnet ist, dass**:
- die Betätigungsmittel Folgendes umfassen:
- ein bewegliches Bedienglied (21-23,35), das mit einem Endstück (35) zur Verbindung mit dem Mechanismus (10-19) zum Öffnen der Tür und am gegenüberliegenden Ende mit einem röhrenförmigen Segment (23), dem so genannten Rückstellsegment, versehen ist,
- federnde Druckmittel (20), die zwischen einem feststehenden Anschlagelement (31) und dem Endstück (35) zur Verbindung des Bedienglieds (21-23, 35) angeordnet sind,
- ein Glied (26) zum Halten des Segments (23) zum Zurückstellen des Bedienglieds (21-23, 35), das mindestens zwei Backen (26a, 26b) aufweist, die zwischen einer geschlossenen Stellung zur Verriegelung des Rückstellsegments (23), wobei sich das Bedienglied (21-23, 35) in einer Stellung befindet, die dem passiven Zustand der Betätigungsmittel entspricht, in der die federnden Mittel (20) komprimiert gehalten werden, und einer geöffneten Stellung zur Freigabe des Rückstellsegments, wodurch die Verschiebung des Bedienglieds (21-23, 35) unter Wirkung der sich aus dem Ausdehnen der federndem Mittel (20) ergebenden Kraft in eine Stellung, die dem aktiven Zustand der Betätigungsmittel entspricht, gestattet wird, beweglich sind,
- die Aktivierungsmittel (27, 28) zum Antrieb des Öffnens der Backen (26a, 26b) des Halteglieds (46) ausgeführt sind.

2. Notöffnungsvorrichtung nach Anspruch 1, **dadurch gekennzeichnet, dass**:
- die Backen (26a, 26b) des Halteglieds (26) entgegen der durch die federnden Mittel ausgeübten Kraft mittels eines die Backen umgebenden Bands in ihrer geschlossenen Stellung gehalten werden,
- die Aktivierungsmittel Mittel (27) zum Halten des Bands in seiner um die Backen (26a, 26b) gewickelten Position umfassen, die auf Befehl die Freigabe des Bands bewirken können.

3. Notöffnungsvorrichtung nach Anspruch 2, **dadurch gekennzeichnet, dass** die Mittel zum Halten des Bands einen Elektromagneten (27), der mit einem Auslöser versehen ist, welcher zum Zusammenwirken mit einem an einem der freien Enden des Bands ausgebildeten Befestigungselement angeordnet ist, und Mittel (28) zur elektrischen Versorgung, die dazu ausgeführt sind, auf Befehl den Elektromagneten zu erregen, um das Element zur Befestigung des Bands freizugeben, umfassen.

4. Notöffnungsvorrichtung nach einem der vorhergehenden Ansprüche, **dadurch gekennzeichnet, dass** das Segment (23) zum Zurückstellen des Bedienglieds (21-23, 35) ein Bedienendstück (25) umfasst, das das Ergreifen des Bedienglieds mittels eines Werkzeugs, das zum Zusammenwirken mit dem Bedienendstück ausgeführt ist, zum Zurückstellen der Betätigungsmittel gestattet.

5. Notöffnungsvorrichtung nach Anspruch 4, **dadurch gekennzeichnet, dass**:
- das Segment (23) zum Zurückstellen des Bedienglieds (21-23, 35) eine Gewindestange (23) umfasst, die um ihre Drehachse drehbar angebracht ist und mit einem Bedienendstück (25) versehen ist, das zum Gestatten des Drehantriebs der Stange ausgeführt ist,
- die Backen (26a, 26b) des Halteglieds (26) in ihrer geschlossenen Stellung eine Gewindebohrung begrenzen, die mit der Gewindestange (23) des Segments (23) zum Zurückstellen des Bedienglieds (21-23, 35) zusammenwirkt,
- das Halteglied (26) und das Bedienglied (21-23, 35) so angeordnet und ausgeführt sind, dass sich mindestens ein Segment der Gewindestange für jede Stellung des Bedienglieds (21-23, 35) in den Eingriff der Bohrung des Halteglieds (26) erstreckt.

6. Notöffnungsvorrichtung nach Anspruch 5, **dadurch gekennzeichnet, dass** das Bedienendstück (25) des Segments (23) zum Zurückstellen des Bedienglieds (21-23, 35) aus einer eine vorbestimmte Kontur bildenden Sackbohrung besteht.

7. Notöffnungsvorrichtung nach einem der Ansprüche 5 oder 6, **dadurch gekennzeichnet, dass** das Halteglied (26) Backen (26a, 26b) aufweist, die so ausgeführt sind, dass sie dem Halteglied die allgemeine Form einer Mutter verleihen.

8. Notöffnungsvorrichtung nach einem der vorhergehenden Ansprüche, **dadurch gekennzeichnet, dass** das Bedienglied (21-23, 35) aus einem Kolben (22) besteht, um den sich die federnden Mittel (20) erstrecken und der mit einem Endstück (35) versehen ist, das einen Anschlag für die federnden Mittel bildet, und der gegenüber dem Verbindungsendstück durch das Rückstellsegment (23) verlängert wird.

9. Notöffnungsvorrichtung nach einem der vorhergehenden Ansprüche, **dadurch gekennzeichnet, dass** das feststehende Anschlagelement der federnden Mittel (20) aus einem röhrenförmigen Abstandsstück (31) besteht, in dessen Verlängerung das Halteglied (26) befestigt ist.

10. Notöffnungsvorrichtung nach einem der vorhergehenden Ansprüche, **dadurch gekennzeichnet, dass** sie zur Aufnahme in einem Arm (1) einer Flugzeugtür ausgeführt ist, der um zwei Wellen (3, 4) angelenkt ist, die an dem Flugzeug bzw. an der Tür angebracht sind, um einen Öffnungsmechanismus zu betätigen, der zum Schwenkantrieb des Arms ausgeführt ist.

## Claims

1. An emergency opening device for an aircraft door having an opening mechanism (10-19), comprising means (20-26) for actuating the opening mechanism, wherein these means can be switched between a passive state and an active state of activation of said opening mechanism, and means (27, 28) for activating the actuating means, said emergency opening device being **characterized in that**:
- the actuating means comprise:
▪ a movable operating member (21-23, 35) having an end-piece (35), for connecting to the opening mechanism (10-19) of the door, and at the opposite end a tubular segment (23) termed a rearming segment,
▪ elastic compression means (20) arranged between a stationary end-stop element (31) and the connecting end-piece (35) of the operating member (21-23, 35),
▪ a member (26) for retaining the rearming segment (23) of the operating member (21-23, 35) comprising at least two jaws (26a, 26b) which can be moved between a closed position locking the rearming segment (23), the operating member (21-23, 35) being in a position which corresponds to the passive state of the actuation means in which the elastic means (20) are held in a compressed state, and an open position freeing said rearming segment, allowing the operating member (21-23, 35) to be moved, by the force resulting from the expansion of the elastic means (20), toward a position corresponding to the active state of the actuation means,
- the activation means (27, 28) are designed to drive the opening of the jaws (26a, 26b) of the retaining member (26).

2. The emergency opening device as claimed in claim 1, **characterized in that**:
- the jaws (26a, 26b) of the retaining member (26) are held in their closed position, against the force exerted by elastic means, by means of a brace which surrounds said jaws,
- the activation means comprise means (27) for holding the brace in its position wrapped around the jaws (26a, 26b), which means are designed to release said brace on command.

3. The emergency opening device as claimed in claim 2, **characterized in that** the means for holding the brace comprise an electromagnet (27) having a trigger arranged so as to engage with a latching element formed at one of the free ends of said brace, and electrical supply means (28) designed to energize said electromagnet on command so as to free the latching element of the brace.

4. The emergency opening device as claimed in one of the preceding claims, **characterized in that** the rearming segment (23) of the operating member (21-23, 35) comprises an operating end-piece (25) designed such that said operating member can be gripped using a tool designed to engage with said operating end-piece in order to rearm the actuation means.

5. The emergency opening device as claimed in claim 4, **characterized in that**:
- the rearming segment of the operating member (21-23, 35) comprises a threaded rod (23) mounted so as to be able to rotate about its axis of revolution and having an operating end-piece (25) designed to allow said rod to be driven in rotation,
- the jaws (26a, 26b) of the retaining member (26) delimit, in their closed position, a tapped bore which mates with the threaded rod (23) of the rearming segment of the operating member (21-23, 35),
- the retaining member (26) and the operating member (21-23, 35) being arranged and designed such that at least one segment of the threaded rod (23) extends into the bore of the retaining member (26) for every position of the operating member (21-23, 35).

6. The emergency opening device as claimed in claim 5, **characterized in that** the operating end-piece (25) of the rearming segment (23) of the operating member (21-23, 35) consists of a blind bore forming a predetermined imprint.

7. The emergency opening device as claimed in either of claims 5 and 6, **characterized in that** the retaining member (26) features jaws (26a, 26b) which are designed such that said retaining member has the general shape of a nut.

8. The emergency opening device as claimed in one of the preceding claims, **characterized in that** the operating member (21-23, 35) consists of a piston (22), around which extend the elastic means (20), wherein said piston has a connecting end-piece (35) constituting an end-stop for said elastic means and wherein, at the other end from said connecting end-piece, the rearming section (23) extends from said piston.

9. The emergency opening device as claimed in one of the preceding claims, **characterized in that** the stationary end-stop element of the elastic means (20) consists of a tubular spacer (31), the retaining member (26) being attached in a line with said spacer.

10. The emergency opening device as claimed in one of the preceding claims, **characterized in that** it is designed to be integrated into an arm (1) of an aircraft door, which arm is articulated about two shafts (3, 4) which are respectively mounted on said aircraft and said door, to provide for the actuation of an opening mechanism designed to force said arm to pivot.
